# EUROPÄISCHE PATENTSCHRIFT

(11) **EP 2 283 249 B1**
(45) Veröffentlichungstag und Bekanntmachung des Hinweises auf die Patenterteilung: **10.12.2014**
(21) Anmeldenummer: 09761340.0
(22) Anmeldetag: 27.02.2009
(51) Int. Cl.: F16G 15/04

(54) **VERKÜRZUNGSRINGGABEL ZUM VERKÜRZEN EINES KETTENSTRANGS**
SHORTENING ANNULAR FORK FOR SHORTENING A CHAIN STRAND
FOURCHE À ANNEAU DE RACCOURCISSEMENT POUR RACCOURCIR UN BRIN DE CHAÎNE

(30) Priorität: 13.06.2008 DE 102008028111
(43) Veröffentlichungstag der Anmeldung: 16.02.2011
(73) Patentinhaber: RUD Ketten Rieger & Dietz GmbH u. Co. KG, 73432 Aalen (DE)
(72) Erfinder: SMETZ, Reinhard, 86720 Kleinerdlingen (DE)
(74) Vertreter: Grünecker, Kinkeldey, Stockmair & Schwanhäusser
(86) Internationale Anmeldenummer: PCT/EP2009/001417
(87) Internationale Veröffentlichungsnummer: WO 2009/149777

(56) Entgegenhaltungen:
- WO-A1-97/23404
- WO-A1-2004/087554
- WO-A1-2006/114201
- AT-B- 391 927
- DE-A1- 2 310 344

## Beschreibung

Die Erfindung betrifft eine Verkürzungsvorrichtung zum Verkürzen eines Kettenstrangs, die einen Abschlussabschnitt mit wenigstens einer Anschlussöffnung, ein Verkürzungsorgan, wenigstens eine Verankerungsaufnahme zur Aufnahme eines Endgliedes des Kettenstrangs, die an einer dem Verkürzungsorgan zugewandten Seite des Anschlussabschnittes angeordnet und durch einen in eine Aussparung eingesetzten Haltebolzen verschlossen ist, und einen den Anschlussabschnitt mit dem Verkürzungsorgan verbindenden Steg, der an einem in Längsrichtung weisenden Ende der Aussparung angeordnet ist, umfasst, wobei die Verkürzungsvorrichtung einen Grundkörper aufweist, der den Anschlussabschnitt, das Verkürzungsorgan, den den Anschlussabschnitt mit dem Verkürzungsorgan verbindenden Steg sowie die Verankerungsaufnahme umfasst, und wobei die Anschlussöffnung als geschlossene Öse ausgebildet und die Verankerungsaufnahme durch eine separate Öffnung gebildet ist.

Eine Kupplungsvorrichtung für eine Kette mit einem Verkürzungselement beschreibt die EP 0 868 386 B1. Die in den Figuren 1 bis 6 gezeigten Ausführungsformen weisen einen hakenförmigen Anschlussbügel zur Aufnahme eines mit einer Abflachung versehenen Anschlussgliedes auf. Bei den Ausführungsformen der Figuren 1, 5 und 6 ist die Öffnung des Anschlussbügels durch einen Sicherungsbolzen verschlossen. Während die Ausführungsformen der Figuren 1 bis 4 Verkürzungshaken aufweisen, ist in den Figuren 5 und 6 eine Verkürzungsklaue gezeigt.

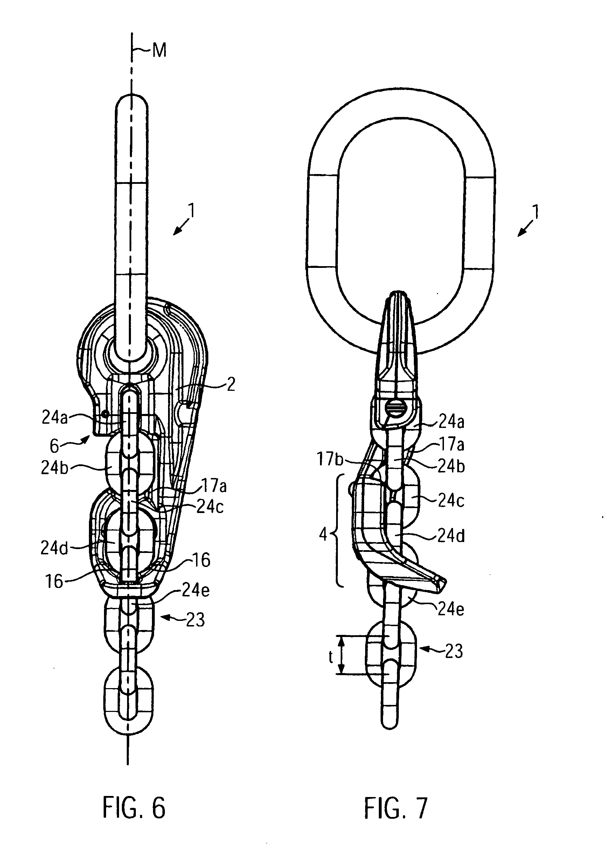

Auch die EP 0 092 382 B1 offenbart Verkürzungsvorrichtungen, deren Verkürzungsorgan als Verkürzungsklaue ausgebildet ist. Die in den Figuren 6 bis 12 gezeigten Ausführungsformen weisen jeweils einen Schlitz mit zwei fluchtenden Aussparungen zur Aufnahme eines Haltebolzens auf, durch den ein Endglied der Hebekette mit der Verkürzungsvorrichtung verbunden werden kann. Zur Anbindung an ein Hebezeug weisen die Verkürzungsvorrichtungen an ihren oben liegenden Enden längliche Bohrungen zur Aufnahme eines Schäkelbolzens auf. Die WO 2004/087554 A1 beschreibt einen Lasthaken, der über ein als Verkürzungslasche ausgeführtes Verkürzungsorgan mit einer Hebekette verbunden ist. Das Endglied der Hebekette ist in einem Schlitz über einen in zwei fluchtende Aussparungen eingesetzten Haltebolzen gehalten, wobei der Haltebolzen in einer Durchgangsbohrung angeordnet ist. Der Haltebolzen liegt auf einer Seite der Bohrung auf einem Absatz auf, während die andere Seite der Bohrung durch einen Stift verschlossen ist.

Die WO 95/17620 zeigt eine Verkürzungsvorrichtung, die neben einer Verkarzungsklaue eine Verkürzungslasche aufweist. Über die Verkürzungslasche kann die Verkürzungsklaue

Die WO 95/17620 zeigt eine Verkürzungsvorrichtung, die neben einer Verkürzungsklaue eine Verkürzungslasche aufweist. Über die Verkürzungslasche kann die Verkürzungsklaue an einer beliebigen Stelle eines Kettenstrangs angekuppelt werden. Die Durchziehöffnung der Verkürzungslasche wird dabei durch zwei sich kreuzende Schlitze gebildet.

Eine Verkürzungsvorrichtung mit zwei sich gegenüberstehenden, über einen Rücken verbundenen Verkürzungslaschen offenbart die EP 1 315 919 B1. Beide Verkürzungslaschen weisen zum Durchziehen eines Kettenstrangs zwei sich kreuzende Schlitze auf, von denen einer länger ist und von jeweils zwei Stützzonen begrenzt wird, die zur Abstützung des bogenförmigen Endes jeweils eines Kettengliedes dienen. Zur Sicherung der eingelegten Kettenstränge dient ein zwischen den Verkürzungslaschen angeordneter, gegen eine Feder verschiebbarer Bolzen, der die kreuzförmigen Durchziehöffnungen beider Verkürzungslaschen schneidet.

Die EP 0 868 384 B1 beschreibt ein Kupplungsglied zum Verbinden zweier Kettenstränge. An beiden Enden des Kupplungsgliedes sind schlitzartige Aufnahmen für Kettenglieder angeordnet, die über einen Haltebolzen verschlossen sind. Jeder Aufnahme ist ein Verkürzungsorgan zugeordnet, das beispielsweise nach Art einer Verkürzungslasche oder eines Verkürzungshakens ausgeführt ist.

Die EP 0 767 880 B1 beschreibt eine Verkürzungsvorrichtung, die einen im Wesentlichen U-förmigen Bügel aufweist. Die sich gegenüberstehenden Enden des Bügels laufen aufeinander zu und sind über einen Schraubbolzen miteinander verbunden. Während die weitere Öffnung an den bogenförmigen Abschnitt des Bügels als Durchziehöffnung für einen Kettenstrang dient, sind in den sich gegenüberliegenden Enden des Bügels jeweils Vertiefungen vorgesehen, die als Stützfläche zum Halten eines Kettengliedes dienen. Über den Schraubbolzen kann ein Endglied einer Hebekette mit der Verkürzungsvorrichtung verbunden werden. In einer weiteren Ausführungsform der Verkürzungsvorrichtung sind die beiden Schenkel über einen Quersteg verbunden. Für die Verankerung eines Endgliedes der Kette ist ein Haltebolzen vorgesehen, der in einer beide Enden schneidenden Durchgangsbohrung eingesetzt ist und mit dem Quersteg einen Schlitz zur Aufnahme des Kettengliedes begrenzt.

Die EP 0 868 387 B1 beschreibt eine Kupplungsvorrichtung für Ketten, die einen Grundkörper mit einem Anschlussring sowie zwei zueinander symmetrische Verkürzungselemente umfasst. Die Verkürzungselemente weisen Verkürzungsorgane auf, die als Verkürzungsklauen mit jeweils einer Tasche zur Aufnahme eines Kettengliedes ausgeführt sind, sowie Aufnahmen für ein Endglied einer Kette, die zwischen dem Anschlussring und dem Verkürzungsorgan angeordnet sind und einen in eine Durchgangsbohrung eingesetzten Bolzen aufweisen.

Die DE 3 319 774 C2 zeigt eine Verkürzungsvorrichtung, die nach Art einer Verkürzungsklaue ausgestaltet ist. Die Verkürzungsvorrichtung ist über einen geschlossenen Haltering mit einem geschlossenen Anschlussglied verbunden. Unterhalb des Halterings ist ein Schlitz mit einer mit einem Absatz versehenen Durchgangsbohrung zur Aufnahme eines Haltebolzens vorgesehen, über den ein Endglied mit der Verkürzungsvorrichtung verbunden werden kann. Der Schlitz mündet in die darunterliegende rahmenartige Durchziehöffnung des Verkürzungsorgans.

Die WO 2006/114201 A1, die als nächstliegender Stand der Technik gesehen wird, zeigt eine Verkürzungsvorrichtung mit einem hakenförmigen Anschlussbügel, in den ein mit einer Abflachung versehenes Anschlussglied eingehängt werden kann. Der Anschlussbügel ist über einen länglichen Steg mit dem darunterliegenden Verkürzungsorgan verbunden. Die in Richtung des Verkürzungsorgans weisende Einführöffnung des Anschlussbügels ist mit einem Sicherungsbolzen verschlossen, der gleichzeitig als Haltebolzen für das Endglied des Kettenstranges dient.

Ein Nachteil der aus dem Stand der Technik bekannten Verkürzungsvorrichtungen sind ihre großen Abmessungen und ihr hohes Gewicht, welche die Handhabung der Verkürzungsvorrichtungen erschweren.

Der vorliegenden Erfindung liegt somit die Aufgabe zugrunde, die bekannten Verkürzungsvorrichtungen kleiner und leichter zu gestalten.

Diese Aufgabe wird erfindungsgemäß dadurch gelöst, dass die Anschlussöffnung als geschlossene Öse ausgebildet und die Verankerungsaufnahme durch eine separate Öffnung gebildet ist.

Die geschlossene Öse erhöht in vorteilhafter Weise die Festigkeit der Verkürzungsvorrichtung, da bei einer Einleitung von Zugkräften in die Verkürzungsvorrichtung die im Bereich der Anschlussöffnung auftretenden Biegemomente verringert sind. Damit kann die Verkürzungsvorrichtung bei gleichbleibender Festigkeit insgesamt verkleinert werden. Auch bei der Herstellung der Verkürzungsvorrichtung, beispielsweise beim Schmieden, erweist sich die festigkeitserhöhende Wirkung der geschlossenen Öse als vorteilhaft.

Die erfindungsgemäße Lösung kann durch verschiedene, voneinander unabhängige, jeweils für sich vorteilhafte Ausgestaltungen weiterentwickelt werden. Auf diese Ausgestaltungen und die mit den Ausgestaltungen jeweils verbundenen Vorteile wird im Folgenden kurz eingegangen.

Die erfindungsgemäße Lösung hat den Vorteil, dass die Verankerungsaufnahme durch eine separate Öffnung gebildet ist, deren Größe unabhängig von der Anschlussöffnung verändert werden kann. Damit kann die lichte Weite der Verankerungsaufnahme derart begrenzt werden, dass nur für die Verkürzungsvorrichtung geeignete Ketten, deren Schenkel oder Buge eine vorgegebene Querschnittsfläche oder Breite nicht überschreiten, mit ihrem Endglied in die Verankerungsaufnahme aufgenommen werden können.

Um zu vermeiden, dass Ketten mit einem zu großen Schenkelquerschnitt in die Verankerungsaufnahme der Verkürzungsvorrichtung eingelegt werden können, kann die lichte Weite der Verankerungsaufnahme kleiner oder gleich dem Durchmesser des Haltebolzens sein. Der Durchmesser des Haltebolzens kann derart groß ausgeführt sein, dass er die lichte Weite eines Endgliedes einer zu kleinen, nicht für die Verwendung mit der erfindungsgemäßen Verkürzungsvorrichtung zugelassenen Kette überschreitet und damit die Montage der zu kleinen Kette verhindert.

In einer weiteren vorteilhaften Ausgestaltung kann die lichte Weite der Verankerungsaufnahme etwa gleich der lichten Weite des Einführschlitzes des Verkürzungsorgans sein. Damit wird der Verankerungsaufnahme die Funktion einer Lehre zuzuordnen, welche den größten zugelassenen Querschnitt der Glieder des in das Verkürzungsorgan einzuhängenden Kettenstranges definiert. Auf diese Weise ist sichergestellt, dass in die Verankerungsaufnahme kein Endglied einer Kette eingelegt werden kann, die aufgrund des Querschnittes ihrer Kettenglieder nicht sicher in dem Verkürzungsorgan gehalten wird oder die Tragfähigkeit der Verkürzungsvorrichtung bzw. der Verankerungsaufnahme überschreitet.

Des Weiteren kann die Verkürzungsvorrichtung zwischen dem Haltebolzen und dem unterhalb des Haltebolzens angeordneten Verkürzungsorgan einen Abstand aufweisen, der mindestens der vierfachen Teilung der Glieder eines Kettenstranges entspricht, dessen Endglied an der Verankerungsaufnahme aufnehmbar ist. Die Verkürzung einer Kette durch eine Verkürzungsvorrichtung erfordert üblicherweise eine seitliche Verlagerung des zwischen der Verankerungsaufnahme und dem Verkürzungsorgan angeordneten Kettenabschnittes, d. h. die Bildung einer Kettenschlaufe. Erst durch die erfindungsgemäß vorgesehene Mindestlänge dieses Kettenabschnittes kann eine Verkürzung der Kette um einen Minimalbetrag erreicht werden, der bei einer Ausführung des Verkürzungsorgans als Verkürzungslasche lediglich der zweifachen Teilung der Kette entspricht.

Gemäß einer weiteren vorteilhaften Ausgestaltung kann ein Ende des Haltebolzens in einer Sacklochbohrung und das andere Ende des Haltebolzens in einer durch einen Sicherungsstift verschließbaren Durchgangsbohrung gelagert sein. Indem ein Ende des Haltebolzens in eine Sacklochbohrung eingesetzt ist, ist die Bohrung zur Aufnahme des Bolzens insgesamt verkürzt, wodurch die durch die Bohrung in der Verkürzungsvorrichtung hervorgerufene Kerbwirkung vermindert und damit die Festigkeit der Verkürzungsvorrichtung erhöht ist.

In einer weiteren vorteilhaften Ausgestaltung kann das Verkürzungsorgan von einer Durchziehöffnung und einem in die Durchziehöffnung mündenden Einführschlitz gebildet sein. Zum Halten eines Kettengliedes können in dem Verkürzungsorgan taschenartige Stützflächen vorgesehen sein, die ein quer zum Einführschlitz liegendes Kettenglied aufnehmen. Die von der Durchziehöffnung abgewandten Enden der Seitenwände des Einführschlitzes können durch einen Querjoch miteinander verbunden sein. Diese Ausführungsform des Verkürzungsorgans entspricht einer Verkürzungslasche. Die Verkürzungslasche bietet den Vorteil, dass die Kette ausschließlich durch die Durchziehöffnung eingelegt werden kann und ein Herausrutschen der Kette durch eine seitliche Verschiebung in dem Verkürzungsorgan nicht möglich ist.

Alternativ kann das Verkürzungsorgan als Verkürzungsklaue ausgebildet sein, indem es von zwei über einen Rücken miteinander in Verbindung stehenden, im Wesentlichen parallel zueinander angeordneten Haken gebildet ist, die einen Einführschlitz begrenzen und eine Tasche zur Aufnahme eines auf das in den Einführschlitz eingeführte Kettenglied folgenden Kettengliedes bilden.

Um das Einlegen der Ketten in das Verkürzungsorgan noch weiter zu vereinfachen, kann das Verkürzungsorgan des Weiteren von einem Verkürzungshaken gebildet sein, der einen sich im Wesentlichen in Richtung des Anschlussabschnittes öffnenden Einführschlitz aufweist.

In einer weiteren vorteilhaften Ausgestaltung kann die lichte Weite der Verankerungsaufnahme kleiner oder gleich dem halben Durchmesser der Anschlussöffnung sein. Auf diese Weise ist gewährleistet, dass die Gelenkigkeit der Kettenanordnung im Bereich der Verkürzungsvorrichtung nicht beeinträchtigt ist und sich die Verkürzungsvorrichtung gegenüber einem in der Anschlussöffnung befindlichen Anschlussglied im ausreichenden Maße bewegen kann.

Gemäß einer weiteren vorteilhaften Ausgestaltung der erfindungsgemäßen Verkürzungsvorrichtung kann der Abstand des von der Verankerungsaufnahme weg weisenden Endes der Anschlussöffnung von dem von der Anschlussöffnung weg weisenden Ende der Öffnung der Verankerungsaufnahme kleiner oder gleich der 1,25-fachen Summe aus der lichten Weite der Verankerungsaufnahme und der lichten Weite der Anschlussöffnung sein. Diese Gestaltung ermöglicht eine gedrungene Bauform des Anschlussabschnittes und damit eine insgesamt kompaktere Gestaltung der Verkürzungsvorrichtung.

In die geschlossene Öse der Verkürzungsvorrichtung kann zur Verbindung mit einer Hebeeinrichtung ein Kettenschloss eingehängt werden. Alternativ oder zusätzlich kann in einer weiteren vorteilhaften Ausgestaltung der erfindungsgemäßen Verkürzungsvorrichtung ein durch eine Schweißnaht geschlossenes Anschlussglied in die Anschlussöffnung aufgenommen sein. Diese Ausführungsform der erfindungsgemäßen Verkürzungsvorrichtung bietet den Vorteil einer unverlierbaren Verbindung zwischen dem Grundkörper der Verkürzungsvorrichtung und einem entsprechend der Verkürzungsvorrichtung dimensionierten Anschlussgliedes. Damit ist zwangsläufig stets das zur Verkürzungsvorrichtung passende Anschlussglied mit der Verkürzungsvorrichtung gepaart, d.h. die Verwendung eines nicht geeigneten Anschlussgliedes mit der Verkürzungsvorrichtung ist ausgeschlossen.

Im Folgenden wird die Erfindung anhand unterschiedlicher Ausführungsformen mit Bezug auf die Figuren beispielhaft erläutert. Dabei stellen die beschriebenen Ausführungsformen lediglich mögliche Ausgestaltungen dar, die für den jeweiligen Anwendungsfall modifiziert werden können. Einzelne, für sich vorteilhafte Merkmale können gemäß der obigen Beschreibung der vorteilhaften Ausgestaltungen bei der jeweils beschriebenen Ausführungsform hinzugefügt oder weggelassen werden.

Es zeigen:

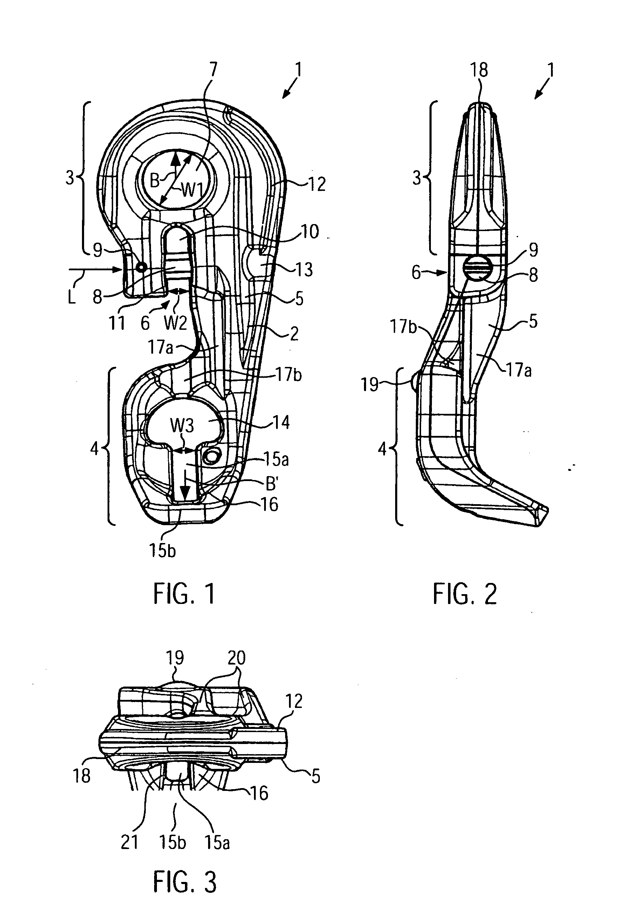

- Fig. 1: eine schematische Seitenansicht eines ersten Ausführungsbeispiels der Erfindung;
- Fig. 2: eine weitere schematische Seitenansicht des ersten Ausführungsbeispiels der Erfindung;
- Fig. 3: eine schematische Draufsicht des ersten Ausführungsbeispiels der Erfindung;

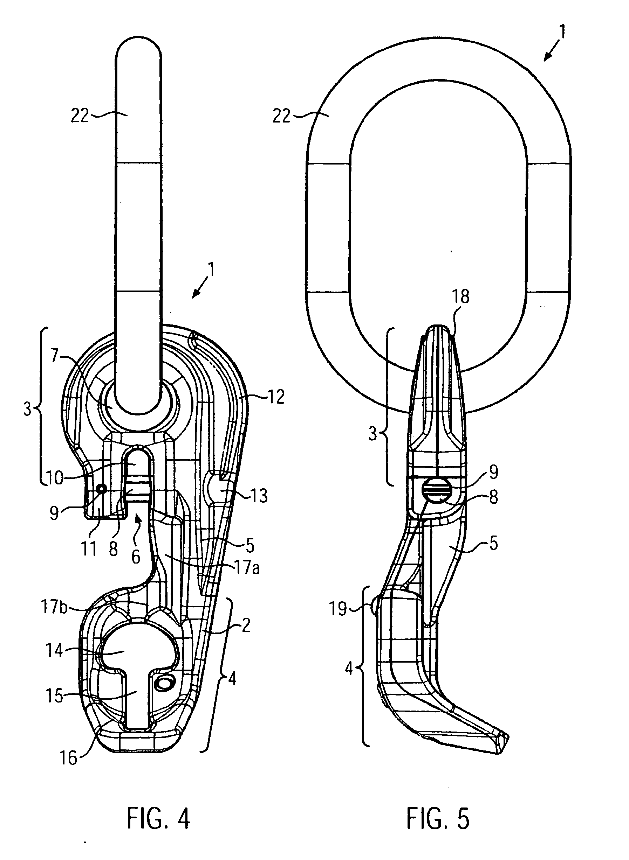

- Fig. 4: eine schematische Seitenansicht eines zweiten Ausführungsbeispiels der Erfindung, das sich von dem in Fig. 1 gezeigten Ausführungsbeispiel durch das in die Anschlussöffnung eingeschweißte Anschlussglied unterscheidet;
- Fig. 5: eine zweite schematische Seitenansicht des zweiten Ausführungsbeispiels der Erfindung;
- Fig. 6: eine weitere schematische Seitenansicht des zweiten Ausführungsbeispiels der Erfindung, das sich von dem in Fig. 4 gezeigten Ausführungsbeispiel durch die in die Verankerungsaufnahme eingehängte Kette unterscheidet;
- Fig. 7: eine weitere schematische Seitenansicht des Ausführungsbeispiels der Fig. 4 und 5 mit einer in die Verankerungsaufnahme eingehängten Kette;

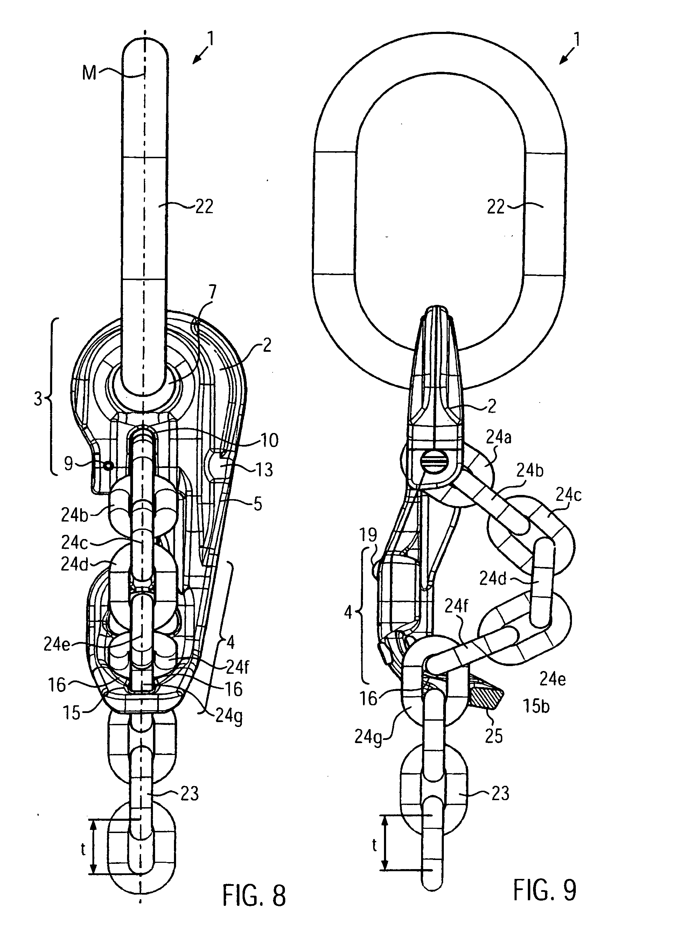

- Fig. 8: eine weitere schematische Seitenansicht des zweiten Ausführungsbeispiels der Erfindung mit verkürztem Kettenstrang;
- Fig. 9: eine weitere schematische Seitenansicht des zweiten Ausführungsbeispiels der Erfindung gemäß Fig. 8;

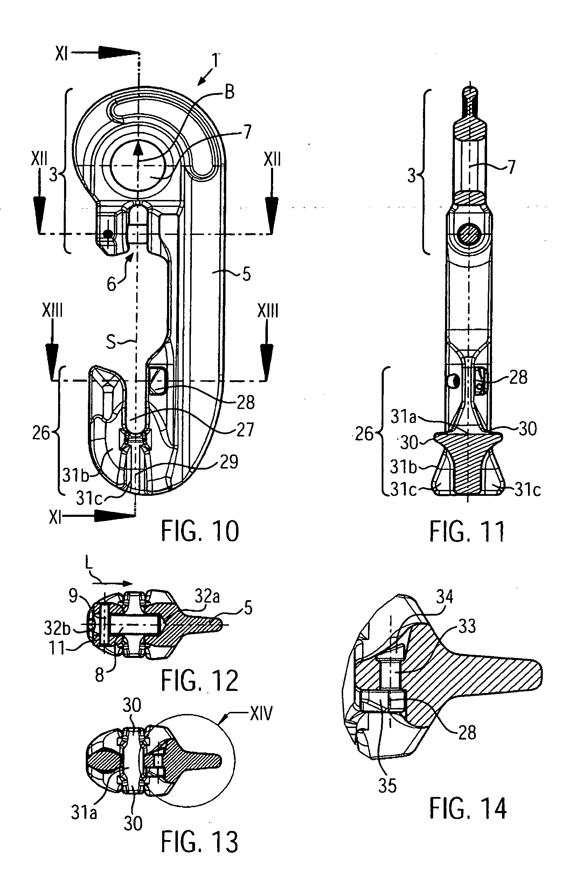

- Fig. 10: eine schematische Seitenansicht eines dritten Ausführungsbeispiels der Erfindung, das sich von dem in Fig. 1 gezeigten Ausführungsbeispiel durch das als Verkürzungshaken ausgeführte Verkürzungsorgan unterscheidet;
- Fig. 11: eine schematische Schnittansicht des Ausführungsbeispiels der Fig. 10 entlang der Schnittlinie XI-XI,
- Fig. 12: eine schematische Schnittansicht des Ausführungsbeispiels der Fig. 10 entlang der Schnittlinie XII-XII;
- Fig. 13: eine schematische Schnittansicht des Ausführungsbeispiels der Fig. 10 entlang der Schnittlinie XIII-XIII;
- Fig. 14: eine vergrößerte Darstellung der schematischen Schnittansicht der Fig. 13 anstelle XIV;

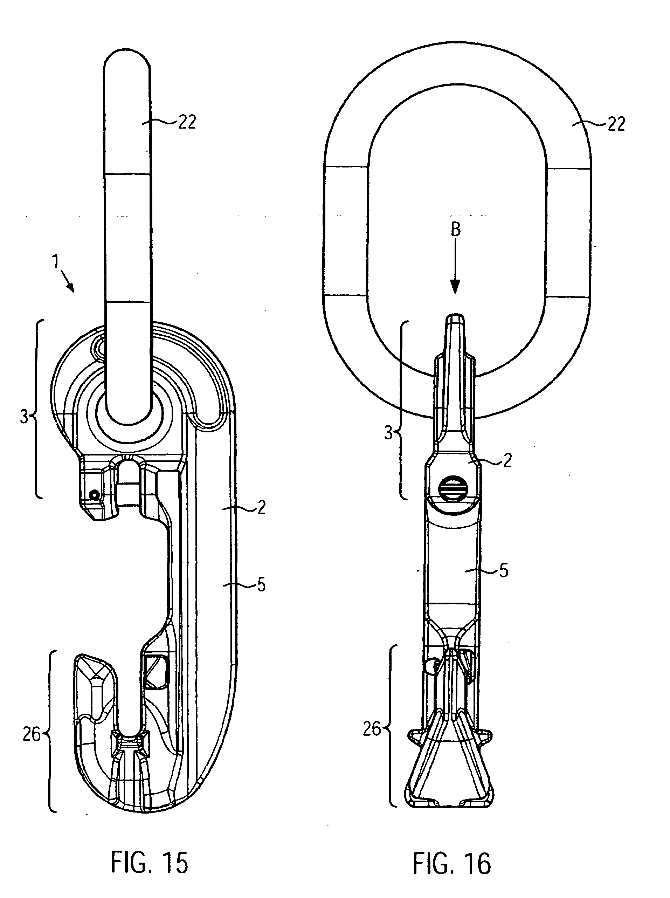

- Fig. 15: eine schematische Seitenansicht eines vierten Ausführungsbeispiels der Erfindung, das sich von dem in Fig. 10 gezeigten Ausführungsbeispiel durch das eingeschweißte Anschlussglied unterscheidet;
- Fig. 16: eine weitere schematische Seitenansicht des vierten Ausführungsbeispiels gemäß Fig. 15;

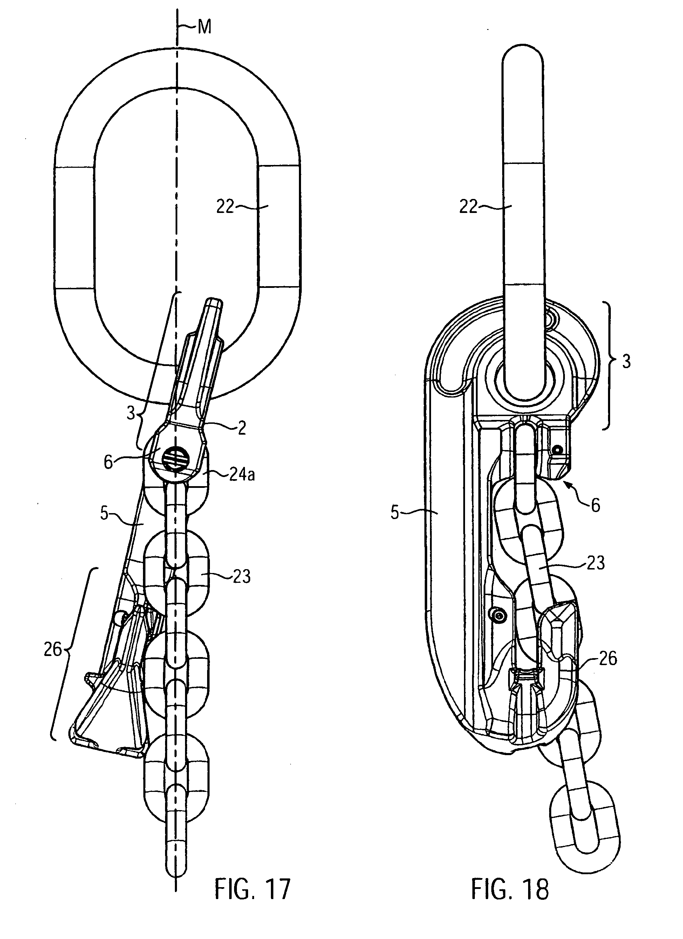

- Fig. 17: eine weitere schematische Seitenansicht des vierten Ausführungsbeispiels mit unverkürztem Kettenstrang;
- Fig. 18: eine weitere schematische Seitenansicht des vierten Ausführungsbeispiels gemäß Fig. 17;

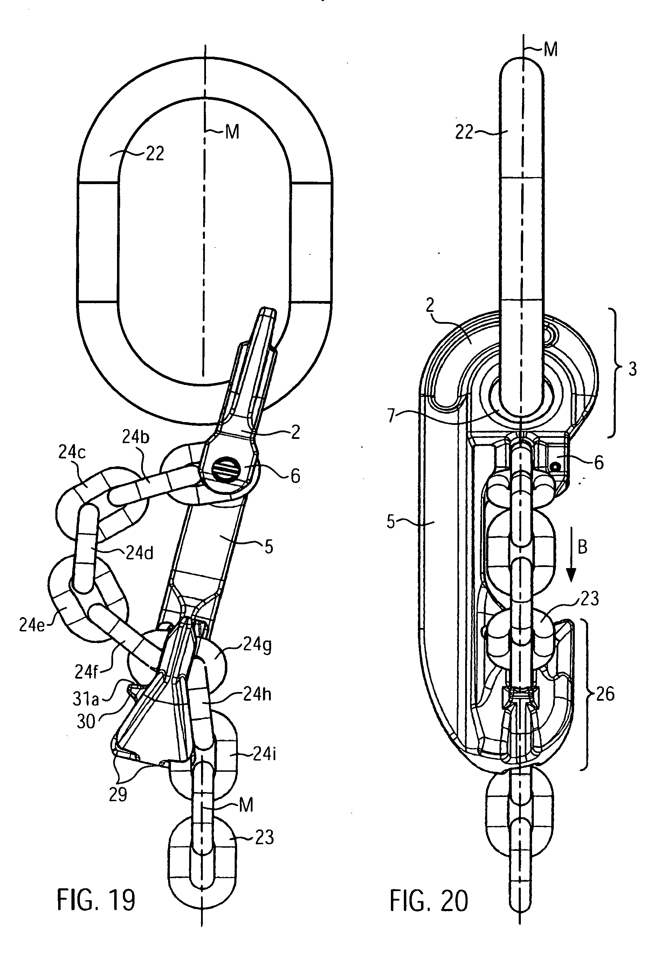

- Fig. 19: eine weitere schematische Seitenansicht des vierten Ausführungsbeispiels mit verkürztem Kettenstrang;
- Fig. 20: eine weitere schematische Seitenansicht des vierten Ausführungsbeispiels gemäß Fig. 19.

Zunächst wird der Aufbau einer erfindungsgemäßen Verkürzungsvorrichtung mit Bezug auf das Ausführungsbeispiel der Figur 1 beschrieben. Die Verkürzungsvorrichtung 1 weist einen Grundkörper 2 auf, der einen Anschlussabschnitt 3, ein Verkürzungsorgan 4, einen den Anschlussabschnitt 3 mit dem Verkürzungsorgan 4 verbindenden Steg 5 sowie eine Verankerungsaufnahme 6 umfasst. Der Anschlussabschnitt 3 ist mit einer Anschlussöffnung 7 versehen, die als geschlossene Öse 7 ausgebildet ist. Die Anschlussöffnung 7 weist ein kreisrundes Profil mit einer lichten Weite W1 auf, während das Profil des die Anschlussöffnung 7 umgebenden Abschnittes des Grundkörpers 2 entsprechend der Belastungen, die im Wesentlichen in einer Belastungsrichtung B auf den Grundkörper 2 bzw. den Anschlussabschnitt 3 einwirken, asymmetrisch ausgestaltet ist. So vergrößert sich der Querschnitt des die Anschlussöffnung 7 umgebenden Bereiches des Grundkörpers 2 im Wesentlichen von der den Steg 5 abgewandte Seite des Anschlussabschnittes 3 zu der den Steg 5 zugewandten Seite des Anschlussabschnittes 3. Gleichzeitig vergrößert sich in der gleichen Richtung in der in Fig. 1 gezeigten Projektion die Dicke des die Anschlussöffnung 7 umgebenden Bereiches des Grundkörpers 2.

Die als Schlitz 10 ausgeformte Öffnung 10 der Verankerungsaufnahme 6 ist durch einen Haltebolzen 8 in Richtung des darunter angeordneten Verkürzungsorgans 4 begrenzt, d. h., der Schlitz 10 der Verankerungsaufnahme 6 ist durch den Haltebolzen 8 verschlossen, der durch einen Sicherungsstift 9 gegen Verrutschen gesichert ist. Der Sicherungsstift 9 kann beispielsweise als Spannstift 9 ausgeführt sein. Der Schlitz 10 ist im Wesentlichen U-förmig, wobei sein bogenförmiges Ende in Belastungsrichtung B zur Anschlussöffnung 7 weist. Eine Seitenwand des Schlitzes 10 ist durch die nach innen weisende Fläche des Steges 5 gebildet, während die zweite innen liegende Fläche des Schlitzes 10 durch einen Fortsatz 11 des Anschlussabschnittes 3 gebildet ist. Die lichte Weite W2 des Schlitzes 10 ist deutlich kleiner als die Hälfte der lichten Weite W1.

Zur Aufnahme des Haltebolzens 8 weist der Fortsatz 11 eine hier nicht gezeigte, als Durchgangsbohrung ausgestaltete Aussparung auf, die mit einer als Sacklochbohrung ausgestalteten Aussparung in dem Steg 5 fluchtet. Sowohl der Haltebolzen 8 als auch die Durchgangsbohrung und die Sacklochbohrung erstrecken sich in eine Längsrichtung L, die quer zur Belastungsrichtung B verläuft.

Der Steg 5 ist an seinem der Verankerungsaufnahme 6 gegenüberliegenden Rücken mit einem Verbreiterungssteg 12 versehen, der sich bis zum Verkürzungsorgan 4 erstreckt. Der Verbreiterungssteg 12 ist durch eine Mulde 13 unterbrochen, die in einer Richtung quer zur Belastungsrichtung B gegenüber dem Haltebolzen 8 angeordnet ist. Wird ein in der Verankerungsaufnahme 6 verankerter Kettenstrang quer zur Belastungsrichtung B über den Steg 5 geführt, kann das dem in der Verankerungsaufnahme 6 angeordnete Kettenglied folgende Kettenglied in der Mulde 13 angeordnet werden. Ein in der Mulde 13 angeordnetes Kettenglied wird durch die im Wesentlichen zylindrische geformte Grundfläche der Mulde 13 gegen seitliches Verrutschen gestützt.

Das Verkürzungsorgan 4 umfasst eine im Wesentlichen halbkreisförmige Durchziehöffnung 14, deren bogenförmiger Abschnitt in Richtung der Anschlussöffnung 7 weist. In die Durchziehöffnung 14 mündet ein Einführschlitz 15a mit einer lichten Weite W3, der von Stützflächen 16 begrenzt wird. Die lichte Weite W3 des Schlitzes 15a entspricht etwa der lichten Weite W2 der Verankerungsaufnahme. Das von der Durchziehöffnung 14 weg weisende Ende des Schlitzes 15a wird durch ein Querjoch 15b begrenzt, das die Seitenwände des Schlitzes 15a miteinander verbindet. Der Steg 5 ist zwischen der Verankerungsaufnahme 6 und der Durchziehöffnung 14 mit einer Abflachung 17a oder Vertiefung 17a versehen, welche einem Kettenglied, das dem in der Verankerungsaufnahme 6 angeordneten Kettenglied folgt, Raum bietet, so dass eine in der Verankerungsaufnahme 6 gehaltene Kette im unverkürzten Zustand ohne Störung durch die Verkürzungsvorrichtung 1 in Belastungsrichtung B' gestreckt werden kann. Eine entsprechende Funktion bietet die Vertiefung 17b, welche einem Kettenglied, das dem in der Vertiefung 17a angeordneten Kettenglied folgt, Raum bietet.

Fig. 2 zeigt eine weitere Seitenansicht des Ausführungsbeispiels der Fig. 1. Der Anschlussabschnitt weist einen Stützsteg 18 auf, der die in Belastungsrichtung B und quer zur Belastungsrichtung B weisenden Abschnitte der Anschlussöffnung 7 umgibt. Der Stützsteg 18 führt zu eine Verlängerung des Querschnittsprofils des die Anschlussöffnung 7 umgebenden Anschlussabschnittes und damit zu einer Versteifung der Verkürzungsvorrichtung 1 im Bereich der Anschlussöffnung 7.

Unterhalb des Anschlussabschnittes 3 verläuft der Steg 5 im Wesentlichen schräg zur Belastungsrichtung B. Damit weicht der Steg 5 einem in die Verankerungsaufnahme 6 eingehängten Kettenstrang aus, so dass ein unverkürzter Kettenstrang nicht durch den Steg 5 oder das dem Steg folgende Verkürzungsorgan 4 ausgelenkt wird. Auf der dem Verkürzungsorgan 4 abgewandten Seite des Steges 5 ist an dem Übergang von dem Steg 5 zu dem Verkürzungsorgan 4 ein Fortsatz 19 angeordnet. Werden mehrere Verkürzungsvorrichtungen 1 nebeneinander angeordnet, beispielsweise in einem Anschlussglied, dient der Fortsatz 19 als Abstandhalter 19, der die Funktion rückwärtig zueinander angeordneter Verkürzungsorgane 4 sicherstellt. Gleichzeitig erfüllt der Fortsatz 19 die Funktion einer Verschleißzone 19, die sicherstellt, dass der bei einem rückwärtigem Aufliegen der Verkürzungsvorrichtung 1 entstehende Abrieb nicht den tragenden Querschnitt des Verkürzungsorgans 4 bzw. des Steges 5 beeinträchtigt.

Figur 3 zeigt eine Draufsicht des Ausführungsbeispiels der Figur 1. Der Stützsteg 18 geht in Richtung des Steges 5 in den Verbreiterungssteg 12 über. Während der Stützsteg 18 und der Verbreiterungssteg 12 einen im Wesentlichen gleichbleibenden Querschnitt aufweisen, verbreitert sich der innerhalb der Stege 12, 18 liegende Bereich des Anschlussabschnittes 3 auf beiden Seiten der Anschlussöffnung 7 in Richtung des Verkürzungsorgans 4.

Auf der dem Verkürzungsorgan 4 abgewandten Seite weist der Steg 5 rippenartige Fortsätze 20 auf, die eine hohe Steifigkeit des Steges 5 bei gleichzeitig geringem Gewicht ermöglichen.

Um das Einführen eines Endgliedes in die Verankerungsaufnahme 6 zu vereinfachen, ist der Grundkörper 2 der Verkürzungsvorrichtung 1 im Bereich der Verankerungsaufnahme 6 mit einer Vertiefung 21 versehen, die im Wesentlichen trichterförmig ist und deren die Verankerungsaufnahme 6 umgebende Flächen ein aufgelegtes Kettenglied in Richtung des Schlitzes 10 führen.

Figur 4 zeigt eine zweite Ausführungsform der erfindungsgemäßen Verkürzungsvorrichtung, wobei für Elemente, die in Funktion und Aufbau den Elementen des Ausführungsbeispiels der Figur 1 entsprechen, dieselben Bezugszeichen verwendet werden. Der Kürze halber wird auf die Unterschiede zum Ausführungsbeispiel der Figur 1 eingegangen.

In die Anschlussöffnung 7 ist ein Anschlussglied 22 eingesetzt, das beispielsweise durch eine Schweißnaht verschlossen ist. Damit ist zwangsläufig stets das zur Verkürzungsvorrichtung 1 passende Anschlussglied 22 in die zugeordnete Anschlussöffnung eingesetzt und unverlierbar mit dem Anschlussabschnitt 3 der Verkürzungsvorrichtung 1 verbunden.

Figur 6 zeigt das Ausführungsbeispiel der Figuren 4 und 5 mit einem in die Verankerungsaufnahme 6 eingehängten, unverkürzten Kettenstrang 23. Das Endglied 24a des Kettenstrangs 23 ist in dem Schlitz 10 der Verankerungsaufnahme 6 eingesetzt und durch den die lichte Weite durchdringenden Haltebolzen 8 gehalten. Aufgrund der Formgebung des Grundkörpers 2 ist die unverkürzte Kette 23 nicht durch die Verkürzungsvorrichtung ausgelenkt, sondern hängt ausgehend von der Verankerungsaufnahme 6 gerade gestreckt nach unten. Damit verläuft der Kraftfluss der über die Verkürzungsvorrichtung übertragenen Zugkraft entlang einer gemeinsamen, geraden Mittellinie M des Anschlussgliedes 22 und der gestreckten Kette 23. Ebenso ist die Verkürzungsvorrichtung 1 bzw. der Grundkörper 2 nicht durch die Kette 23 ausgelenkt. Vielmehr hängt die Verkürzungsvorrichtung 1 bzw. der Grundkörper 2 in einer neutralen Stellung, welche die Verkürzungsvorrichtung 1 bzw. der Grundkörper 2 auch ohne eine eingehängte Kette 23 einnimmt.

Die Figur 7 zeigt das Ausführungsbeispiel der Figuren 4 bis 6 mit verankerter Kette 23 gemäß Figur 6. Durch die Vertiefungen 17a oder Aussparungen 17a liegt das Kettenglied 24b bei gestreckter Kette nicht an dem Grundkörper 2 an. Alternativ kann die Vertiefung 17a derart ausgestaltet sein, dass das Kettenglied 24b an den Grundkörper 2 anliegt, jedoch nicht durch diesen ausgelenkt wird. Entsprechend verhindert die Vertiefung 17b in dem Verkürzungsorgan 4 eine Auslenkung des auf das Kettenglied 24b folgenden Kettengliedes 24c oder einen Flächenkontakt des Kettengliedes 24c an dem Grundkörper 2.

Das Kettenglied 24d ist bei gestreckter Kette 23 kurz über den Stützflächen 16 angeordnet, so dass auch dieses Kettenglied 24d nicht durch eine Berührung mit dem Grundkörper 2 bzw. dem Verkürzungsorgan 4 ausgelenkt wird. Figur 8 zeigt das Ausführungsbeispiel der Figuren 4 bis 7, wobei die Kette 23 der Figur 8 minimal verkürzt ist. Der Minimalbetrag der Verkürzung der Kette 23 entspricht lediglich der zweifachen Teilung t der Kettenglieder. Das im Wesentlichen quer zum Einführschlitz 15a angeordnete Kettenglied 24f liegt dabei auf den Stützflächen 16 des Verkürzungsorgans 4 auf. Durch ein Verdrehen des von dem Verkürzungsorgan 4 weg weisenden Bugs des Kettengliedes 24f werden die darüberliegenden Kettenglieder 24b bis 24d von dem Steg 5 weg bewegt, so dass ausreichend Platz für diesen verkürzten Teil der Kette 23 entsteht.

Figur 9 zeigt eine weitere Seitenansicht des Ausführungsbeispiels der Figuren 6 bis 8 mit einem verkürzten Kettenstrang 23 gemäß Figur 8, wobei ein Abschnitt des Verkürzungsorgans 4 geschnitten dargestellt ist. Während das Kettenglied 24f auf den Stützflächen 16 aufliegt, grenzt das nachfolgende Kettenglied 24d an eine Stützfläche 25 an, welche der nach innen weisenden Fläche des Querjochs 15b entspricht.

Figur 10 zeigt ein weiteres Ausführungsbeispiel der Verkürzungsvorrichtung, wobei für Elemente, die in Funktion und Aufbau den Elementen des Ausführungsbeispiels der Figur 1 entsprechen, dieselben Bezugszeichen verwendet werden. Der Kürze halber wird auf die Unterschiede zum Ausführungsbeispiel der Figur 1 eingegangen.

Bei dieser erfindungsgemäßen Verkürzungsvorrichtung 1 ist das Verkürzungsorgan 4 als Verkürzungshaken 26 ausgeführt. Die schlitzförmige Hakenöffnung 27 weist in Richtung der Verankerungsaufnahme 6, wobei die Symmetrielinie S des Einführschlitzes 27 der Symmetrielinie S der Verankerungsaufnahme 6 sowie der Anschlussöffnung 7 entspricht. Um ein Herausgleiten eines in den Einführschlitz 27 eingelegten Kettengliedes aus dem Einführschlitz 27 zu verhindern, ist ein Sicherungsorgan 28 vorgesehen. Seitliche Nuten 29 an dem Verkürzungsorgan 26 verhindern bei verkürztem Kettenstrang ein Verrutschen oder Verschieben der Kettenglieder, welche auf das in den Einführschlitz 27 eingelegte Kettenglied folgen.

Figur 11 zeigt eine Schnittansicht des Ausführungsbeispiels der Figur 10 an der Stelle XI-XI. Die Kettenglieder eines in das Verkürzungsorgan eingelegten Kettenstrangs werden durch Stützflächen 31a, 31b, 31c gestützt. Das Hakenmaul 27 weist Verbreiterungen 30 auf, welche die Stützfläche 31a verbreitern. Des Weiteren weist das Verkürzungsorgan 26 Stützflächen 31c auf, welche die Kettenglieder, die dem auf der Stützfläche 31a ruhenden Kettenglied folgen, gegen Verdrehen stützen.

Figur 12 zeigt eine Schnittansicht des Ausführungsbeispiels der Figur 10 an der Stelle XII-XII. Das in Längsrichtung L weisende Ende des Haltebolzens 8 ist auf der dem Steg 5 zugewandten Seite in einer Sacklochbohrung 32a angeordnet. Die Sacklochbohrung 32a fluchtet mit einer Durchgangsbohrung 32b in dem Fortsatz 11 des Anschlussabschnittes 3, in der das von dem Steg 5 weg weisende Ende des Haltebolzens 8 gelagert ist. Das von dem Haltebolzen 8 weg weisende Ende der Sacklochbohrung 32a bildet einen Anschlag für den Haltebolzen 8, so dass dessen Endposition in der Sacklochbohrung 32a festgelegt ist. Alternativ kann an Stelle der Sacklochbohrung 32a eine Stufenbohrung 32a vorgesehen sein. Die Stufenbohrung 32a umfasst eine Durchgangsbohrung, deren dem Haltebolzen 8 zugewandtes Ende etwa den Durchmesser des Haltebolzens 8 aufweist, während ihr dem Haltebolzen 8 abgewandtes Ende mit einem verringerten Durchmesser versehen ist. Der verringerte Durchmesser der Stufenbohrung 32a bildet damit einen Anschlag für den Haltebolzen 8 und gleichzeitig eine Öffnung, durch die der Haltebolzen 8 beispielsweise mittels eines Doms ausgeschlagen werden kann. Der Haltebolzen 8 ist durch einen Sicherungsstift 9, der quer zur Längsrichtung L verläuft und die Durchgangsbohrung 32b schneidet, gegen Herausrutschen gesichert.

Figur 13 zeigt eine Schnittansicht des Ausführungsbeispiels der Figur 10 an der Stelle XIII-XIII der Figur 10. Die im Wesentlichen ebene Stützfläche 31a ist durch die Verbreiterungen 30 vergrößert. Die Stützflächen 31b sind gegenüber der Belastungsrichtung B abgewinkelt.

Figur 14 zeigt eine vergrößerte schematische Darstellung des Ausschnittes XIV der Figur 13. Das Sicherungsorgan 28 ist über einen Bolzen 33 verdrehbar in dem Verkürzungsorgan 26 gelagert. Der Bolzen 33 weist an beiden Enden Verbreiterungen 34, 35 auf, die für einen formschlüssigen Halt des Sicherungsorgans 28 sorgen.

Figuren 15 und 16 zeigen ein fünftes Ausführungsbeispiel, wobei für Elemente, die in Funktion und Aufbau den Elementen der bisher beschriebenen Ausführungsbeispiele entsprechen, dieselben Bezugszeichen verwendet werden. Der Kürze halber wird auf die Unterschiede zu dem Ausführungsbeispiel der Figur 10 eingegangen.

Auch die Verkürzungsvorrichtung 1 der Figuren 15 und 16 weist ein als Verkürzungshaken 26 ausgeführtes Verkürzungsorgan 26 auf. Die Verkürzungsvorrichtung 1 umfasst ein Anschlussglied 22, das in die Anschlussöffnung 7 eingesetzt durch und eine Schweißnaht verschlossen ist.

Figur 17 zeigt das Ausführungsbeispiel der Figuren 15 und 16 mit einer Kette 23, deren Endglied 24a in die Verankerungsaufnahme 6 eingesetzt ist. Bei unverkürzter Kette 23 liegt das Verkürzungsorgan 26 seitlich an der Kette 23 an. Aus diesem Grund ist der Grundkörper 2 gegenüber dem Anschlussglied 22 seitlich verlagert und leicht verdreht, während die Kette 23 gerade gestreckt ist. Das Anschlussglied 22 und die Kette 23 weisen eine gemeinsame Mittellinie M auf, auf der bei einer Zugbelastung der Verkürzungsvorrichtung 1 der Kraftfluss des Anschlussgliedes 22 und der gestreckten Kette 23 liegt. Damit verläuft der Kraftfluss entlang einer geraden Linie und es werden keine Momente auf das Anschlussglied 22 übertragen.

Figur 18 zeigt eine weitere Seitenansicht des Ausführungsbeispiels der Figuren 15 bis 17 gemäß der Figur 17 mit unverkürzter Kette 23. Die Kette 23 ist aufgrund des Abstandes zwischen der Verankerungsaufnahme 6 und dem Verkürzungsorgan 4, der durch den Steg 5 hergestellt wird, frei schwenkbar, ohne dass bei Zugbelastung der Kette 23 eine vertikale Kraft auf das Verkürzungsorgan 26 ausgeübt wird.

Figur 19 zeigt das Ausführungsbeispiel der Figuren 15 bis 18 mit verkürzter Kette 23. Die Kette 23 ist um den minimalen Betrag einer etwa dreifachen Teilung t der Kettenglieder verkürzt. Das Kettenglied 24g ist in das Hakenmaul 27 aufgenommen und liegt mit der Außenfläche seines unteren Längsschenkels auf der Stützfläche 31 a auf. Das benachbarte Kettenglied 24f bildet mit den darüberliegenden Kettengliedern 24a bis 24e einen Bogen, der in der Verankerungsaufnahme 6 endet. Das dem Kettenglied 24e folgende, nach unten hängende Kettenglied 24h liegt an der seitlichen, abgewinkelten Stützfläche 31 b mit beiden Längsschenkeln auf. Das dem Kettenglied 24h nach unten folgende Kettenglied 24i ist hingegen in der Nut 29 angeordnet, die das Kettenglied 24i über die seitlichen Stützflächen 31 c gegen Verdrehen stützt. Wie bei der unverkürzten Kette gemäß Figur 17 weisen das Anschlussglied 22 und der gestreckte Abschnitt der Kette 23 eine gemeinsame Mittellinie M auf, auf der bei einer Zugbelastung der Verkürzungsvorrichtung 1 der Kraftfluss des Anschlussgliedes 22 und der Kette 23 liegt. Damit verläuft der Kraftfluss auch bei verkürzter Kette entlang einer Geraden und es werden keine Momente auf das Anschlussglied 22 übertragen.

Figur 20 zeigt das Ausführungsbeispiel der Figuren 15 bis 19 in einer weiteren schematischen Seitenansicht mit verkürzter Kette gemäß Figur 19. Die Kette 23 verläuft in der gezeigten Betrachtungsrichtung geradlinig in Belastungsrichtung B.

## Patentansprüche

1. Verkürzungsvorrichtung (1) zum Verkürzen eines Kettenstrangs (23), die einen Anschlussabschnitt (3) mit wenigstens einer Anschlussöffnung (7),
ein Verkürzungsorgan (4, 26),
wenigstens eine Verankerungsaufnahme (6) zur Aufnahme eines Endgliedes (24a) des Kettenstrangs (23), die an einer dem Verkürzungsorgan (4, 26) zugewandten Seite des Anschlussabschnittes (3) angeordnet und durch einen in eine Aussparung (32) eingesetzten Haltebolzen (8) verschlossen ist,
und einen den Anschlussabschnitt (3) mit dem Verkürzungsorgan (4, 26) verbindenden Steg (5), der an einem in Längsrichtung weisenden Ende des Haltebolzens (8) angeordnet ist, umfasst, wobei die Verkürzungsvorrichtung (1) einen Grundkörper (2) aufweist, der den Anschlussabschnitt (3), das Verkürzungsorgan (4, 26), den den Anschlussabschnitt (3) mit dem Verkürzungsorgan (4, 26) verbindenden Steg (5) sowie die Verankerungsaufnahme (6) umfasst, und wobei die Anschlussöffnung (7) als geschlossene Öse (7) ausgebildet und die Verankerungsaufnahme (6) durch eine separate Öffnung (10) gebildet ist **dadurch gekennzeichnet,**
**dass** die lichte Weite (W2) der Verankerungsaufnahme (6) kleiner oder gleich dem Durchmesser des Haltebolzens (8) ist.

2. Verkürzungsvorrichtung (1) nach Anspruch 1 **dadurch gekennzeichnet, dass** die lichte Weite (W2) der Verankerungsaufnahme (6) kleiner oder gleich der halben lichten Weite (W1) der Anschlussöffnung (7) ist.

3. Verkürzungsvorrichtung (1) nach einem der obigen Ansprüche, **dadurch gekennzeichnet, dass** der Abstand zwischen dem Haltebolzen (8) und dem unterhalb des Haltebolzens (8) angeordneten Verkürzungsorgan (4, 26) mindestens der vierfachen Teilung (t) der Glieder des Kettenstranges (23) entspricht, dessen Endglied (24a) an der Verankerungsaufnahme (6) aufnehmbar ist.

4. Verkürzungsvorrichtung (1) nach einem der obigen Ansprüche, **dadurch gekennzeichnet, dass** das eine Ende des Haltebolzens (8) in einer Sacklochbohrung (32a) oder Stufenbohrung und das andere Ende des Haltebolzens (8) in einer durch einen Sicherungsstift (9) verschließbaren Durchgangsbohrung (32b) gelagert ist.

5. Verkürzungsvorrichtung (1) nach einem der obigen Ansprüche, **dadurch gekennzeichnet, dass** das Verkürzungsorgan (4, 26) von zwei über einen Rücken miteinander in Verbindung stehenden, im wesentlichen parallel zueinander angeordneten Haken gebildet ist, die einen Einführschlitz begrenzen und eine Tasche zur Aufnahme eines auf das in den Einführschlitz eingeführte Kettenglied folgenden Kettengliedes bilden.

6. Verkürzungsvorrichtung (1) nach einem der Ansprüche 1 bis 4, **dadurch gekennzeichnet, dass** das Verkürzungsorgan (4, 26) eine Durchziehöffnung (14), einen in die Durchziehöffnung (14) mündenden Einführschlitz (15a) und ein die von der Durchziehöffnung (14) abgewandten Enden der Seitenwände des Schlitzes (10) verbindendes Querjoch (15b) aufweist.

7. Verkürzungsvorrichtung (1) nach einem der Ansprüche 1 bis 4, **dadurch gekennzeichnet, dass** das Verkürzungsorgan (26) als Verkürzungshaken (26) ausgeführt ist, der einen sich im Wesentlichen in Richtung des Anschlussabschnittes (3) öffnenden Einführschlitz (27) aufweist.

8. Verkürzungsvorrichtung (1) nach einem der Ansprüche 5 bis 7, **dadurch gekennzeichnet, dass** die lichte Weite (W2) der Verankerungsaufnahme (6) etwa gleich der lichten Weite (W3) des Einführschlüzes (15a) ist.

9. Verkürzungsvorrichtung (1) nach einem der obigen Ansprüche, **dadurch gekennzeichnet, dass** der Abstand des von der Verankerungsaufnahme (6) weg weisenden Endes der Anschlussöffnung (7) von dem von der Anschlussöffnung (7) weg weisenden Ende der Öffnung (10) der Verankerungsaufnahme (6) kleiner oder gleich der 1,25-fachen Summe aus der lichten Weite (W2) der Verankerungsaufnahme (6) und der lichten Weite (W1) der Anschlussöffnung (7) ist.

10. Verkürzungsvorrichtung nach einem der obigen Ansprüche, **dadurch gekennzeichnet, dass** ein durch eine Schweißnaht geschlossenes Anschlussglied (22) in die Anschlussöffnung (7) aufgenommen ist.

## Claims

1. Shortening device (1) for shortening a chain strand (23), comprising a connecting section (3) with at least one connecting opening (7),
a shortening member (4, 26),
at least one anchoring receptacle (6) for receiving an end link (24a) of the chain strand (23) which anchoring receptacle (6) is arranged at a side of the connecting section (3) facing the shortening member (4, 26) and closed by a retaining pin (8) inserted in a cutout (32),
and a web (5) connecting the connecting section (3) with the shortening member (4, 26), which web (5) is arranged at an end of the retaining pin (8) pointing in the longitudinal direction, wherein the shortening device (1) comprises a basic body (2) comprising the connecting section (3), the shortening member (4, 26), the web (5) connecting the connecting section (3) with the shortening member (4, 26) as well as the anchoring receptacle, and wherein
the connecting opening (7) is embodied as a closed eye (7) and the anchoring receptacle (6) is formed by a separate opening (10), **characterized in that** the clear diameter (W2) of the anchoring receptacle (6) is smaller than or equal to the diameter of the retaining pin (8).

2. Shortening device (1) according to claim 1, **characterized in that** the clear diameter (W2) of the anchoring receptacle (6) is smaller than or equal to half the clear diameter (W1) of the connecting opening (7).

3. Shortening device (1) according to one of the above claims, **characterized in that** the distance between the retaining pin (8) and the shortening member (4, 26) arranged underneath the retaining pin (8) corresponds to at least four times the pitch (t) of the links of the chain strand (23) of which the end link (24a) can be received at the anchoring receptacle (6).

4. Shortening device (1) according to one of the above claims, **characterized in that** the one end of the retaining pin (8) is held in a blind hole (32a) or a stepped hole, and the other end of the retaining pin (8) is held in a through hole (32b) closable by a locking pin (9).

5. Shortening device (1) according to one of the above claims, **characterized in that** the shortening member (4, 26) is formed by two hooks being in connection with each other via a back and being arranged essentially in parallel, the hooks limiting an insertion slot and forming a pocket for receiving a chain link following the chain link inserted in the insertion slot.

6. Shortening device (1) according to one of claims 1 to 4, **characterized in that** the shortening member (4, 26) comprises a pull-through opening (14), an insertion slot (15a) ending in the pull-through opening (14), and a cross yoke (15b) connecting the ends of the side walls of the slot (10) facing away from the pull-through opening (14).

7. Shortening device (1) according to one of claims 1 to 4, **characterized in that** the shortening member (26) is formed as shortening hook (26) which comprises an insertion slot (27) essentially opening in the direction of the connecting section (3).

8. Shortening device (1) according to one of claims 5 to 7, **characterized in that** the clear diameter (W2) of the anchoring receptacle (6) is approximately equal to the clear diameter (W3) of the insertion slot (15a).

9. Shortening device (1) according to one of the above claims, **characterized in that** the distance from the end of the connecting opening (7) pointing away from the anchoring receptacle (6) to the end of the opening (10) of the anchoring receptacle (6) pointing away from the connecting opening (7) is smaller than or equal to 1.25 times the sum of the clear diameter (W2) of the anchoring receptacle (6) and the clear diameter (W1) of the connecting opening (7).

10. Shortening device (1) according to one of the above claims, **characterized in that** a connecting member (22) closed by a weld seam is received in the connecting opening (7).

## Revendications

1. Dispositif de raccourcissement (1) pour raccourcir un brin de chaîne (23), qui comprend un tronçon de raccordement (3) avec au moins une ouverture de raccordement (7),
un organe de raccourcissement (4, 26),
au moins un logement d'ancrage (6), qui est destiné à accueillir un maillon terminal (24a) du brin de chaîne (23), et qui est agencé sur un côté du tronçon de raccordement (3), dirigé vers l'organe de raccourcissement (4, 26), et est fermé par une broche de retenue (8) insérée dans un évidement (32),
et une branche (5) reliant le tronçon de raccordement (3) à l'organe de raccourcissement (4, 26) et agencée à une extrémité longitudinale de la broche de retenue (8), le dispositif de raccourcissement (1) présentant un corps de base (2), qui englobe le tronçon de raccordement (3), l'organe de raccourcissement (4, 26), la branche (5) reliant le tronçon de raccordement (3) à l'organe de raccourcissement (4, 26), ainsi que le logement d'ancrage (6),
et l'ouverture de raccordement (7) étant réalisée sous forme d'anneau fermé (7), et le logement d'ancrage (6) étant formé par une ouverture séparée (10),
**caractérisé**
**en ce que** la largeur libre d'ouverture (W2) du logement d'ancrage (6) est inférieure ou égale au diamètre de la broche de retenue (8).

2. Dispositif de raccourcissement (1) selon la revendication 1, **caractérisé en ce que** la largeur libre d'ouverture (W2) du logement d'ancrage (6) est inférieure ou égale à la moitié de la largeur libre d'ouverture (W1) de l'ouverture de raccordement (7).

3. Dispositif de raccourcissement (1) selon l'une des revendications précédentes, **caractérisé en ce que** la distance entre la broche de retenue (8) et l'organe de raccourcissement (4, 26) agencé sous la broche de retenue (8), correspond à au moins quatre fois le pas (t) des maillons du brin de chaîne (23) dont le maillon terminal (24a) peut être accueilli dans le logement d'ancrage (6).

4. Dispositif de raccourcissement (1) selon l'une des revendications précédentes, **caractérisé en ce que** l'une des extrémités de la broche de retenue (8) est montée dans un alésage borgne (32a) ou un alésage étagé, et l'autre extrémité de la broche de retenue (8) est montée dans un alésage de passage (32b) pouvant être fermé par une goupille de sécurité (9).

5. Dispositif de raccourcissement (1) selon l'une des revendications précédentes, **caractérisé en ce que** l'organe de raccourcissement (4, 26) est formé de deux crochets agencés sensiblement de manière parallèle l'un à l'autre et en liaison réciproque par l'intermédiaire d'un dos, et qui délimitent une fente d'introduction et une poche destinée à accueillir un maillon de chaîne succédant au maillon de chaîne ayant été introduit dans la fente d'introduction.

6. Dispositif de raccourcissement (1) selon l'une des revendications 1 à 4, **caractérisé en ce que** l'organe de raccourcissement (4, 26) présente une ouverture de traversée (14), une fente d'introduction (15a) débouchant dans l'ouverture de traversée (14), et une traverse (15b) reliant les extrémités de paroi latérale de la fente (10), qui sont éloignées de l'ouverture de traversée (14).

7. Dispositif de raccourcissement (1) selon l'une des revendications 1 à 4, **caractérisé en ce que** l'organe de raccourcissement (4, 26) est réalisé sous forme de crochet de raccourcissement (26), qui présente une fente d'introduction (27) s'ouvrant sensiblement en direction du tronçon de raccordement (3).

8. Dispositif de raccourcissement (1) selon l'une des revendications 5 à 7, **caractérisé en ce que** la largeur d'ouverture libre (W2) du logement d'ancrage (6) est environ égale à la largeur d'ouverture libre (W3) de la fente d'introduction (15a).

9. Dispositif de raccourcissement (1) selon l'une des revendications précédentes, **caractérisé en ce que** la distance de l'extrémité de l'ouverture de raccordement (7), qui est éloignée du logement d'ancrage (6), à l'extrémité de l'ouverture (10) du logement d'ancrage (6), qui est éloignée de l'ouverture de raccordement (7), est inférieure ou égale à 1,25 fois la somme de la largeur d'ouverture libre (W2) du logement d'ancrage (6) et de la largeur d'ouverture libre (W1) de l'ouverture de raccordement (7).

10. Dispositif de raccourcissement selon l'une des revendications précédentes, **caractérisé en ce qu'**un maillon de raccordement (22) fermé par un joint soudé, est reçu dans l'ouverture de raccordement (7).
